# EUROPEAN PATENT SPECIFICATION

(11) **EP 2 545 823 B1**
(45) Date of publication and mention of the grant of the patent: **03.09.2014**
(21) Application number: 12176619.0
(22) Date of filing: 16.07.2012
(51) Int. Cl.: A47J 31/36

(54) **Brewing unit for brewed beverage-making machines**
Braueinheit für Maschinen zur Herstellung von Braugetränken
Unité d'infusion pour machines de préparation de boissons infusées

(30) Priority: 14.07.2011 IT TO20110619
(43) Date of publication of application: 16.01.2013
(73) Proprietor: N&W Global Vending S.p.A., Valbrembo (IT)
(72) Inventor: Colleoni, Paolo, 24016 San Pellegrino (IT)
(74) Representative: Bergadano, Mirko

(56) References cited:
- EP-A1- 2 030 537
- WO-A1-2009/007804

## Description

The present invention relates to a brewing unit for brewed, in particular coffee, beverage-making machines.

More specifically, the present invention relates to a brewing unit of the type comprising a brewing assembly, and a bin located beneath the brewing assembly to catch the waste material expelled from the brewing assembly; the brewing assembly comprising a number of members, in turn comprising a brewing chamber for receiving brew material, first unloading means movable along the brewing chamber to expel the waste material from the brewing chamber, and second unloading means movable with respect to the brewing chamber to engage the expelled waste material and unload it into the bin; at least one of said members being mounted to perform an oscillating movement.

A brewing assembly of this type is described in the Applicant's WO/2009/007804 published on 15 January, 1009, and EP 2241228 published on 20 October, 2010. Another prior art brewing assembly is known from EP 2030537 A1.

Though designed for use with the brewing assembly described in EP2241228, in which both the brewing chamber and the first unloading means are mounted to oscillate about an axis, the present invention can also be used with any brewing assembly, in which the brewing chamber is fixed, but at least one oscillating member, e.g. an oscillating member forming part of the first or second unloading means, is provided.

Brewing units of the above type pose the problem of effectively distributing the waste material inside the bin, and more specifically of preventing the waste material dumped into the bin from forming a rapidly rising cone which soon reaches the brewing assembly overhead, with the result that only part of the volume of the bin is actually used.

It is an object of the present invention to provide a brewing unit of the above type, designed to provide a simple, relatively low-cost method of distributing the waste material inside the bin.

According to the present invention, there is provided a brewing unit as claimed in Claim 1 and preferably in any one of the Claims depending directly or indirectly on Claim 1.

A non-limiting embodiment of the present invention will be described by way of example with reference to the accompanying drawings, in which :
Figure 1 shows a partly hatched, partly sectioned view of a preferred embodiment of the brewing unit according to the present invention;
Figures 2 to 6 show a detail of Figure 1 in respective operating positions;
Figure 7 shows a larger-scale view in perspective of a detail in Figures 1 to 6.

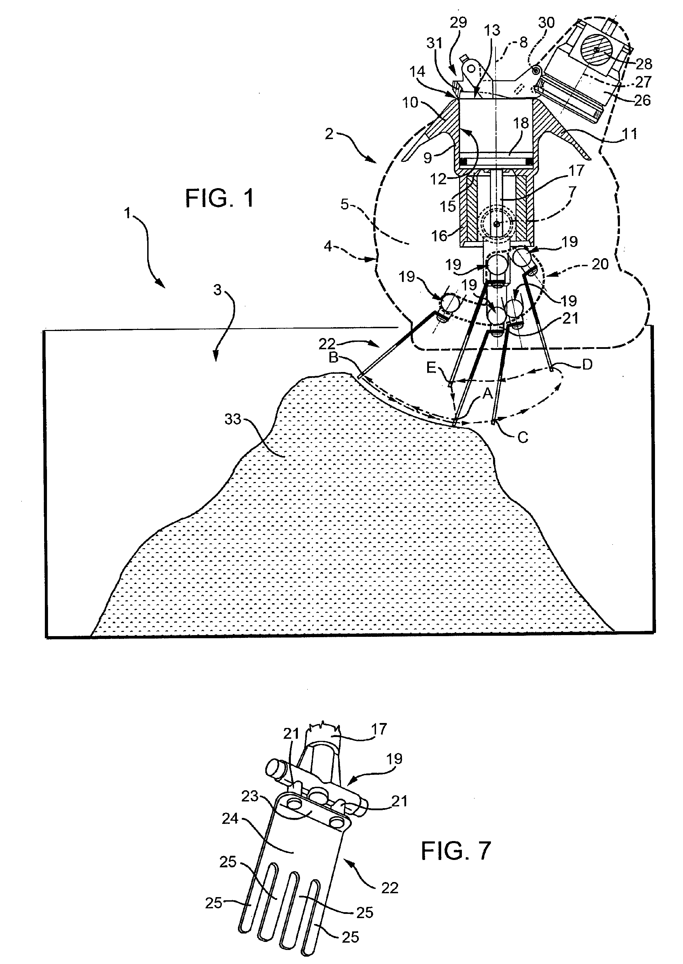

Number 1 in Figure 1 indicates as a whole a brewing unit for brewed, in particular coffee, beverage-making machines (not shown).

Unit 1 comprises a known brewing assembly 2 for receiving brew material - in this case, ground coffee for producing espresso (ES) and/or fresh-brew (FB) coffee; and a cup-shaped, open-topped bin 3 located beneath brewing assembly 2 to catch the waste material - in this case, coffee grounds - expelled from brewing assembly 2.

Brewing assembly 2 is substantially identical to the one described in EP 2241228, to which the reader is referred for a detailed description.

Generally, brewing assembly 2 comprises a casing 4 defined by two integral vertical shoulders 5 (only one shown) spaced a given distance apart to define a space housing an elongated brewing body 6, which is fitted to shoulders 5 to oscillate, with respect to casing 4, about a horizontal axis 7 perpendicular to shoulders 5.

Brewing body 6 has a longitudinal axis 8 perpendicular to axis 7, and comprises a top portion defined by a cylindrical cup-shaped body 9 with a sloping front tab 10 and a sloping rear tab 11. Cup-shaped body 9 is coaxial with axis 8, internally defines a brewing chamber 12 communicating with the outside through a top loading-unloading opening 13 formed through a top surface 14, and is closed at the bottom by a bottom wall 15.

Brewing body 6 also comprises a bottom portion defined by a tubular body 16 coaxial with cup-shaped body 9 and extending downwards from bottom wall 15. The rod 17 of an ejector piston 18 is mounted to slide inside tubular body 16 and through an axial hole formed through bottom wall 15; piston 18 is defined by a plate mounted to slide axially inside brewing chamber 12; and the bottom end of rod 17, opposite the end connected to piston 18, is fitted with a T-shaped member 19 (Figure 7), the bottom end of which has two diametrically opposite radial arms, each of which engages a respective system 20 of fixed and movable control cams connected to respective panel 5 and described in detail in EP 2241228. Piston 18 is normally maintained in a lowered rest position, contacting bottom wall 15 of cup-shaped body 9, by elastic means (not shown) fitted to rod 17 and compressed between bottom wall 15 and T-shaped member 19.

As shown more clearly in Figure 7, each arm of T-shaped member 19 has a radial appendix 21, which projects downwards, parallel to rod 17 and axis 8, and supports, together with the other radial appendix 21, a levelling device 22 projecting beneath casing 4 and inside bin 3.

Levelling device 22 comprises a bent plate, in turn comprising a portion 23 crosswise to axis 8 and connected integrally to the free ends of appendixes 21; and a further portion, which extends from portion 23 to define a substantially rectangular paddle 24 bent downwards and frontwards with respect to, and forming an angle of 100-150° with, portion 23.

In the example shown, paddle 24 is toothed, with longitudinal end teeth 25.

The space between shoulders 5 is also fitted with a pressure piston 26 having a longitudinal axis 27, and two diametrically opposite radial appendixes 28 (only one shown), which are coaxial with each other and with an axis parallel to axis 7, and each engage, in transversely-sliding, angularly-fixed manner, a respective guide (not shown) fitted to respective panel 5.

Full details of piston 26 and its operating system are also provided in EP 2241228.

Piston 26 is movable along axis 27 between a lowered position, in which piston 26 slides in fluidtight manner along cup-shaped body 9 to close brewing chamber 12, and a raised position, in which piston 26 is fully extracted from and located a given height above brewing chamber 12.

The space between shoulders 5 is also fitted with a passive doctor device 29 for unloading into bin 3 the waste material expelled from brewing chamber 12 by piston 18.

Doctor device 29 is U-shaped, is hinged to shoulders 5, frontwards of piston 26, to oscillate about an axis 30 parallel to axis 7, and comprises an intermediate member defined by a doctor 31, which is parallel to axis 7, is located along the path travelled by top surface 14 of cup-shaped body 9 oscillating about axis 7, and is pushed by elastic means (not shown) to normally slide in contact with top surface 14 and tab 10.

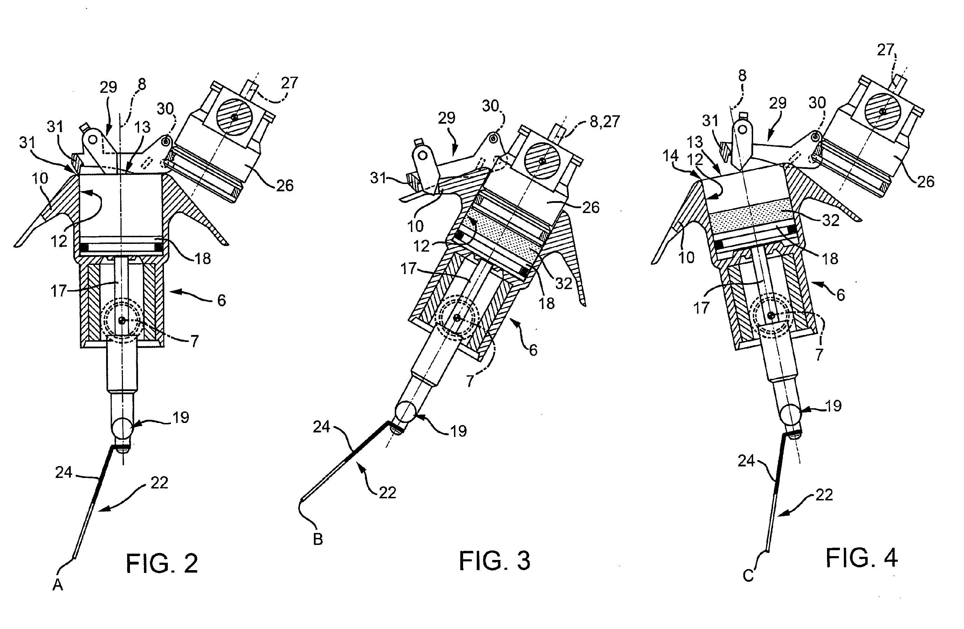

Operation of brewing unit 1 is described in detail in EP 2241228, so will only be described here briefly, with particular reference to the operation of levelling device 22 as a function of the successive positions assumed by brewing body 6 during each beverage, i.e. ES or FB, making cycle, and as of the Figure 1 and 2 loading position, in which axis 7 is substantially vertical, opening 13 of cup-shaped body 9 is located between axis 30 and doctor 31 and directly beneath a hopper (not shown) for loading the brew material, piston 18 is in the lowered rest position contacting bottom wall 15 of brewing chamber 12, piston 26 is in a raised rest position, and the free end of paddle 24 is in a position A (Figures 1 and 2) inside bin 3.

Once the brew material is loaded, brewing body 6 is rotated (clockwise in Figures 1 and 3) about axis 7 to move brewing chamber 12 into a brewing position, in which opening 13 of brewing chamber 12 is aligned with and positioned facing piston 26, which can then be lowered (Figure 3) inside the brewing chamber to close it and make the beverage. When making the beverage, the free end of paddle 24 remains stationary in a position B (Figures 1 and 3) inside bin 3.

Once the beverage is brewed, piston 26 is extracted from the brewing chamber, and brewing body 6 is rotated in the opposite (anticlockwise) direction.

Over a first part (Figure 4) of the anticlockwise rotation of brewing body 6, during which opening 13 moves beneath doctor 31, piston 18 remains in the lowered rest position, and the free end of paddle 24 moves along an arc of a circle coaxial with axis 7, to move through position A into a position C (Figures 1 and 4).

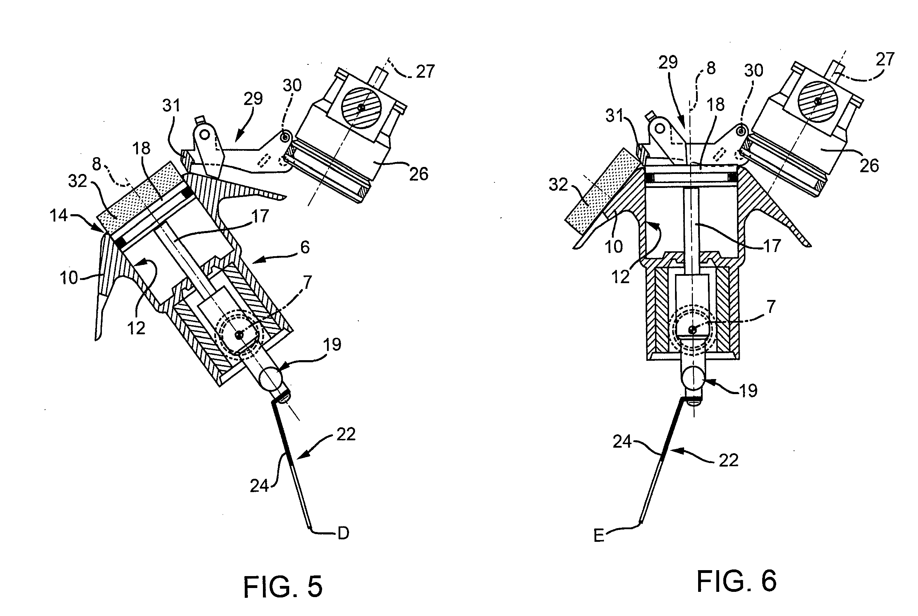

Over a second part of the anticlockwise rotation of brewing body 6, during which opening 13 moves past doctor 31 (Figure 5), piston 18 moves into a fully extracted position, and the free end of paddle 24 moves into a position D (Figures 1 and 5).

As shown in Figure 5, as it moves into the extracted position, piston 18 expels a cake 32 of waste material from brewing chamber 12 and into a position outwards of opening 13 of brewing chamber 12.

Once the cake is expelled, brewing body 6 is rotated again in the opposite (clockwise) direction.

As brewing body 6 rotates clockwise, piston 18 remains in the extracted position (Figure 6); opening 13 moves back into the loading position, moving beneath doctor 31, so that cake 32 is engaged by doctor 31, is moved gradually onto tab 10, and eventually drops into bin 3 along a fall path extending substantially vertically downwards from the free end of tab 10; and the free end of paddle 24 moves from position D to a position E (Figures 1 and 6) along a substantially circular trajectory centred about axis 7 but smaller in radius than the arc B-A-C described above.

Finally, piston 18 is moved into the rest position, thus moving the free end of paddle 24 from position E to position A.

As shown in Figure 1, as the above operating cycle is performed repeatedly by unit 1, cakes 32 drop into bin 3, and, accumulating at the bottom of bin 3, tend to form a substantially conical mound 33 rising gradually at the top towards brewing assembly 2.

As will be clear from the above description, at each operating cycle, the free end of paddle 24 travels along an endless path A-B-A-C-D-E-A, one portion B-A-C-D of which extends inside bin 3, substantially along an arc of a circle centred about axis 7. So, when mound 33 rises to the point of interfering with portion B-A-C-D, the paddle levels mound 33 and distributes the waste material inside bin 3 to prevent mound 33 from reaching brewing assembly 2.

## Claims

1. A brewing unit for brewed beverage-making machines, the unit (1) comprising a brewing assembly (2), and a bin (3) located beneath the brewing assembly (2) to catch waste material expelled from the brewing assembly (2); the brewing assembly (2) comprising a number of members, in turn comprising a brewing chamber (12) for receiving brew material, first unloading means (18) movable along the brewing chamber (12) to expel the waste material from the brewing chamber (12), and second unloading means (29) movable with respect to the brewing chamber (12) to engage and unload the expelled waste material into the bin (3); at least one (12) of said members being an oscillating member designed to rotate about an axis (7); the brewing unit (1) being **characterized in that** the brewing assembly (2) comprises levelling means (22) for levelling the waste material inside the bin (3); and the levelling means (22) being associated with the oscillating member to oscillate with it, and extending from the oscillating member (12) into the bin (3).

2. A brewing unit as claimed in Claim 1, wherein the levelling means (22) comprise a paddle (24) movable inside the bin (3).

3. A brewing unit as claimed in Claim 2, wherein the paddle (24) is comb-shaped.

4. A brewing unit as claimed in one of the foregoing Claims, wherein the brewing chamber (12) is mounted to oscillate about said axis (7), and has a top opening (13) movable about said axis (7) along a path extending through a brew material loading position, a brewing position, and a waste material unloading position; the levelling means (22) being mounted to oscillate with the brewing chamber (12) about said axis (7).

5. A brewing unit as claimed in Claim 4, wherein the second unloading means (29) comprise a doctor (31) located above the brewing chamber (12) and substantially tangent to said path of said opening (13).

6. A brewing unit as claimed in Claim 4 or 5, wherein the first unloading means (18) comprise a piston (18) movable by a reciprocating motion along the brewing chamber (12); the levelling means (22) being integral with the piston (18) to oscillate with the brewing chamber (12) about said axis (7) and translate with the piston (18) with respect to the brewing chamber (12).

7. A brewing unit as claimed in Claim 6, wherein the brewing chamber (12) comprises a bottom wall (15), and the piston (18) comprises a rod (17) mounted to slide through the bottom wall (15) and having a free end located outside the brewing chamber (12) and facing the bin (3); the levelling means (22) being connected integrally to said free end.

8. A brewing unit as claimed in Claims 2 or 3 and 7, wherein said paddle (24) slopes with respect to said rod (17) towards a fall path along which the waste material engaged by the second unloading means (29) drops.

## Patentansprüche

1. Eine Braueinheit für Maschinen zur Herstellung von Braugetränken, wobei die Einheit (1) eine Brauanordnung (2) sowie ein unterhalb der Brauanordnung angeordnetes Gefäß (3) zum Auffangen von aus der Braueinheit (2) ausgestoßenem Abfallmaterial umfasst, wobei die Braueinheit (2) eine Anzahl von Elementen umfasst, die wiederum eine Braukammer (12) zur Aufnahme von Braumaterial, erste Ablademittel (18), die zum Ausstoßen des Abfallmaterials aus der Braukammer (12) längs der Braukammer (12) beweglich sind, sowie zweite Ablademittel (29) umfassen, die relativ zur Braukammer (12) beweglich sind, um in das ausgestoßene Abfallmaterial einzugreifen und dieses in das Gefäß (3) abzuladen, wobei zumindest eines (12) der Elemente ein Schwingelement zur Rotation um eine Achse (7) ist, **dadurch gekennzeichnet, dass** die Brauanordnung (2) Nivelliermittel (22) zum Nivellieren des Abfallmaterials in dem Gefäß (3) umfasst und die Nivelliermittel (22) so mit dem Schwingelement in Verbindung stehen, dass sie zusammen mit diesem schwingen, und sich von dem Schwingelement (12) aus in das Gefäß (3) erstrecken.

2. Eine Braueinheit gemäß Anspruch 1, wobei die Nivelliermittel (22) ein in dem Gefäß (3) bewegliches Paddel (24) umfassen.

3. Eine Braueinheit gemäß Anspruch 2, wobei das Paddel (24) kammförmig ist.

4. Eine Braueinheit gemäß einem der vorgenannten Ansprüche, wobei die Braukammer (12) schwingbar um die Achse (7) gelagert ist und eine obere Öffnung (13) aufweist, die um die Achse (7) längs eines Weges beweglich ist, der sich durch eine Braumaterial-Ladeposition, eine Brauposition sowie eine Abfallmaterial-Abladeposition erstreckt, wobei die Nivelliermittel (22) zusammen mit der Braukammer (12) schwingbar um die Achse (7) gelagert sind.

5. Eine Braueinheit gemäß Anspruch 4, wobei die zweiten Ablademittel (29) einen Abstreifer (31) umfassen, der oberhalb der Braukammer (12) und im Wesentlichen tangential zum Weg der Öffnung (13) angeordnet ist.

6. Eine Braueinheit gemäß Anspruch 4 oder 5, wobei die ersten Ablademittel (18) einen Kolben (18) umfassen, der durch eine hin- und hergehende Bewegung längs der Braukammer (12) beweglich ist, wobei die Nivelliermittel (22) einstückig mit dem Kolben ausgeführt sind, so dass sie zusammen mit der Braukammer (12) um die Achse (7) schwingen und sich zusammen mit dem Kolben (18) relativ zur Braukammer (12) hin- und herbewegen.

7. Eine Braueinheit gemäß Anspruch 6, wobei die Braukammer (12) eine Bodenwand (15) umfasst und der Kolben (18) eine durch die Bodenwand (15) gleitend gelagerte Kolbenstange (17) mit einem freien Ende umfasst, das außerhalb der Braukammer (12) angeordnet und dem Gefäß (3) zugewandt ist, wobei die Nivelliermittel (22) einstückig mit dem freien Ende verbunden sind.

8. Eine Braueinheit gemäß Anspruch 2 oder 3 und 7, wobei das Paddel (24) relativ zur Kolbenstange (17) in Richtung eines Fallweges geneigt ist, entlang dem das mit den zweiten Ablademitteln (29) in Eingriff stehende Abfallmaterial nach unten fällt.

## Revendications

1. Unité d'infusion pour machines de préparation de boissons infusées, l'unité (1) comprenant un ensemble d'infusion (2), et un compartiment (3) situé sous l'ensemble d'infusion (2) pour récupérer les déchets expulsés de l'ensemble d'infusion (2) ; l'ensemble d'infusion (2) comprenant un certain nombre d'organes, comprenant quant à eux une chambre d'infusion (12) pour recevoir un matériau d'infusion, des premiers moyens de déchargement (18) mobiles le long de la chambre d'infusion (12), pour expulser les déchets de la chambre d'infusion (12), et des seconds moyens de déchargement (29) mobiles par rapport à la chambre d'infusion (12) pour enclencher et décharger les déchets expulsés dans le compartiment (3) ; au moins l'un (12) desdits organes étant un organe oscillant conçu pour tourner autour d'un axe (7) ; l'unité d'infusion (1) étant **caractérisée en ce que** l'ensemble d'infusion (2) comprend des moyens de nivellement (22) destinés à niveler les déchets à l'intérieur du compartiment (3) ; et les moyens de nivellement (22) étant associés à l'organe oscillant afin d'osciller avec celui-ci, et s'étendant à partir de l'organe oscillant (12) vers l'intérieur du compartiment (3).

2. Unité d'infusion selon la revendication 1, dans laquelle les moyens de nivellement (22) comprennent une lame (24) mobile à l'intérieur du compartiment (3).

3. Unité d'infusion selon la revendication 2, dans laquelle la lame (24) a une forme de peigne.

4. Unité d'infusion selon l'une quelconque des revendications précédentes, dans laquelle la chambre d'infusion (12) est montée pour osciller autour dudit axe (7), et a une ouverture de dessus (13) mobile autour dudit axe (7) le long d'un chemin s'étendant à travers une position de chargement de matériau d'infusion, une position d'infusion et une position de déchargement de déchets ; les moyens de nivellement (22) étant montés pour osciller avec la chambre d'infusion (12) autour dudit axe (7).

5. Unité d'infusion selon la revendication 4, dans laquelle les seconds moyens de déchargement (29) comprennent une racle (31) située au-dessus de la chambre d'infusion (12) et sensiblement tangente audit chemin de ladite ouverture (13).

6. Unité d'infusion selon la revendication 4 ou 5, dans laquelle les premiers moyens de déchargement (18) comprennent un piston (18) mobile en un mouvement de va et vient le long de la chambre d'infusion (12) ; les moyens de nivellement (22) étant solidaires avec le piston (18) afin d'osciller avec la chambre d'infusion (12) autour dudit axe (7) et de translater avec le piston (18) par rapport à la chambre d'infusion (12).

7. Unité d'infusion selon la revendication 6, dans laquelle la chambre d'infusion (12) comprend une paroi inférieure (15), et le piston (18) comprend une tige (17) montée pour coulisser à travers la paroi inférieure (15) et ayant une extrémité libre située à l'extérieur de la chambre d'infusion (12) et en regard du compartiment (3) ; les moyens de nivellement (22) étant raccordés de façon solidaire à ladite extrémité libre.

8. Unité d'infusion selon les revendications 2 ou 3 et 7, dans laquelle ladite lame (24) est inclinée par rapport à ladite tige (17) vers un chemin de chute le long duquel les déchets enclenchés par les seconds moyens de déchargement (29) tombent.
